# EUROPEAN PATENT APPLICATION

(11) **EP 4 722 011 A1**
(43) Date of publication of application: **08.04.2026**
(21) Application number: 24204288.5
(22) Date of filing: 02.10.2024
(51) Int. Cl.: B60K 1/04

(54) **ENERGY STORAGE ARRANGEMENT WITH OPEN ENDED COMPARTMENTS**

(71) Applicant: Volvo Truck Corporation, 405 08 Göteborg (SE)
(72) Inventor: LANDVIK, Sondre, 417 61 GÖTEBORG (SE); BERNHART, Eric, GREENSBORO, 27410 (US)
(74) Representative: Kransell & Wennborg KB

(57) **Abstract**

The present disclosure relates to an energy storage arrangement (100) for a vehicle, the energy storage arrangement comprising a battery supporting frame structure (200), comprising a first, a second, a third, and a fourth compartment, wherein a first traction battery module (302) is arranged in the first compartment (222), a second traction battery module (304) is arranged in the second compartment (224), a third traction battery module (306) is arranged in the third compartment (228), and a fourth traction battery module (308) is arranged in the fourth compartment (230).

## Description

### TECHNICAL FIELD

The disclosure relates generally to suspension of traction battery modules. In particular aspects, the disclosure relates to an energy storage arrangement with open ended compartments. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage arrangements, often in the form of traction batteries, need to be relatively large in size to be able to contain a sufficient level of energy such that the vehicle can be operated at an acceptable range using the electric traction motors. The large energy storage arrangements are in turn of substantial weight, and there is a challenged to position and assemble/dis-assemble these energy storage systems to the frame of the heavy duty vehicle.

### SUMMARY

According to a first aspect of the disclosure, there is provided an energy storage arrangement for a vehicle, the energy storage arrangement comprising a battery supporting frame structure, comprising a first elongated frame member, a second elongated frame member, and a third elongated frame member, each of the first, second and third elongated frame members arranged in parallel and extending in a first direction from a respective first end to a respective second end, wherein each of the first, second and third elongated frame members are arranged to be connected to a frame of the vehicle, a first cross-member attached to the first and second elongated frame members at a distance from the respective first end of the first and second elongated frame members to form a first and a second compartment on a respective opposite side of the first cross-member, and a second cross-member attached to the second and third elongated frame members at a distance from the respective first end of the second and third elongated frame members to form a third and a fourth compartment on a respective opposite side of the second cross-member, wherein each of the first and third compartments is open ended at a first side of the battery supporting frame structure, the first side being arranged at a position corresponding to a position of the first end of at least one of the first, second and third elongated frame members, and a plurality of traction battery modules, wherein a first traction battery module is arranged in the first compartment, a second traction battery module is arranged in the second compartment, a third traction battery module is arranged in the third compartment, and a fourth traction battery module is arranged in the fourth compartment.

The first aspect of the disclosure may seek to improve and simplify assembly and disconnection of traction battery modules from a vehicle frame. A technical benefit may include that the traction battery modules can be individually assembled or disconnected to or from the vehicle frame. Hence, a single traction battery module can hereby for example be simply replaced by another traction battery module without having to disconnect the traction battery modules arranged in the vicinity of the replaceable traction battery module. In addition, by arranging the first and third compartments with open ends at the first side, the first and third traction battery modules can be connected to, or removed from, the battery supporting frame structure in a horizontal direction. This will simplify the connection and dis-connection of the first and third traction battery modules to the battery supporting frame structure. The battery supporting frame structure can by itself be supported by the frame of the vehicle. Further, the second and fourth compartments may be provided without an open ended side, whereby the second and fourth traction battery modules and can therefore be well protected by elongated frame members and cross-members. The second and fourth compartments may however also be provided with open ended sides, such that a two-by-two matrix of traction battery modules is formed. By simplifying the assembly process of the traction battery modules to the battery supporting frame structure, and thereby also to the frame of the vehicle, a more rapid production assembly process can be obtained at the production line. In other words, the disclosure may enable for a high volume production of vehicles using traction battery modules. Also, high volume production may be simplified as the battery supporting frame structure, together with the plurality of traction battery modules can be docked to the frame of the vehicle as one large unit. Alternatively, the arrangement can be split into sub-units where the battery supporting frame structure and only some of the traction battery modules are mounted to the frame of the vehicle as one unit, and where additional traction battery modules are subsequently mounted to the battery supporting frame structure.

Furthermore, by individually arranging the traction battery modules inside the battery supporting frame structure, twisting forces exposed to the battery frame supporting structure may not be transferred into the traction battery modules. The battery supporting frame structure, together with the plurality of traction battery modules hence act as one rigid mass. This mass can be softly suspended to the frame of the vehicle and can be protected from the chassis' frame twisting. Hence, the traction battery modules may be less exposed to twisting forces caused during operation of the vehicle. Also, by arranging the battery supporting frame structure and the plurality of traction battery modules as one large and rigid mass, sensitive electronic components of the energy storage arrangement may be exposed to lower acceleration levels. Also, using the battery supporting frame structure enables for the connection of other components, such as e.g. electric junction boxes, a 24V battery box, etc.

The wording "open ended" should be construed such that no elongated frame member or cross-member is arranged at the side defined as open ended. The first and third traction battery modules can hence be removed from the respective first and third compartments at the open end without having to initially remove an elongated frame member or cross-member from the battery supporting frame structure. In other words, the area defined as the open end between the first ends of the first and second elongated frame members is free from a structure connected to the respective first and traction battery modules. The first and third traction battery modules are hence non-connected to the battery supporting frame structure at the open end since there is no such structure present at that position. As will be described below, a protective plate may be connected to the first, second and third elongated frame members at the respective first end thereof. This should however not be construed in a manner that the first and third compartments are not open ended at the first side. On the contrary, the protective plate forms part of the energy storage arrangement and the first and third compartments form part of the battery supporting frame structure which is still open ended at the first side. Such protective plate does hence not form part of the battery supporting frame structure.

Optionally in some examples, including in at least one preferred example, each of the first and third traction battery modules is removable from the battery supporting frame structure in the first direction through the open ended first side of the battery supporting frame structure. A technical benefit may include, as indicated above, that the first and third traction battery modules can be removed in a substantially horizontal direction. Hence, removing the first and third traction battery modules can be made in one single direction.

Optionally in some examples, including in at least one preferred example, the first and second traction battery modules are each suspended to the first and second elongated frame members. A technical benefit may include that the first and second elongated frame members may be formed by a high strength material that can sustain the relatively high weight of the traction battery modules. Optionally, the first and second traction battery modules are not suspended by the first cross-member, which first cross-member can be designed by a lower strength material or be of smaller dimension compared to the first and second elongated frame members. The material costs can be reduced and the battery supporting structure can be arranged in a stiff manner with minimum twisting. Hence, natural twisting of the frame of the vehicle is allowed but the forces/torques generated therefrom may not be transmitted to the first and second traction battery modules.

Optionally in some examples, including in at least one preferred example, the energy storage arrangement further comprising a first set of brackets connecting the first traction battery module to the first and second elongated frame members, and a set of second set of brackets connecting the second traction battery module to the first and second elongated frame members. A technical benefit may include that the first and second traction battery modules can be well suspended to the first and second elongated frame members.

Optionally in some examples, including in at least one preferred example, the first set of brackets is connected to an upper elongated side of the first and second elongated frame members, and the second set of brackets is connected to a lower elongated side of the first and second elongated frame members, the upper and lower elongated sides facing in opposite directions. A technical benefit may include that the first set of brackets can be reachable from above the battery supporting frame structure. Hereby, an operator can in a relatively simple and comfortable manner fixate or disconnect the first set of brackets to or from the elongated frame members. The upper elongated side may hence be a side facing away from the ground, i.e. facing in an upward direction. By connecting the second set of brackets to the lower elongated side of the first and second elongated frame members, the second traction battery module can be arranged between two frame members of the vehicle frame, and thereby disconnected and subsequently removed from the battery supporting frame structure in a vertical direction. The lower elongated side may hence be a side facing the ground, i.e. facing in a downward direction.

Optionally in some examples, including in at least one preferred example, the energy storage arrangement further comprises a set of frame brackets, each frame bracket being connected to one of the first, second and third elongated frame members and configured to be attached to the frame of the vehicle. A technical benefit may include that the first, second and third elongated frame members can be well connected to the frame of the vehicle.

Optionally in some examples, including in at least one preferred example, the energy storage arrangement further comprises a set of elastic bushings, the elastic bushings being attached to the first and second sets of brackets and/or to the frame bracket. A technical benefit may include that the traction battery modules can be softly suspended to the frame of the vehicle. When the elastic bushings are connected to the first and second sets of brackets, the first, second and third elongated frame members may be rigidly attached to the frame of the vehicle via the frame brackets. On the other hand, when the elastic bushings are connected to the frame brackets, the first and second traction battery modules may be rigidly connected to the respective first and second elongated frame members via the first and second sets of brackets.

Optionally in some examples, including in at least one preferred example, the energy storage arrangement further comprises a protective plate connected to first, second and third elongated frame members at the respective first end thereof. A technical benefit may include that crash loads may be evenly distributed to reduce an intrusion level into a single traction battery module. The protective plate may also reduce the risk of penetration of objects into a traction battery module.

Optionally in some examples, including in at least one preferred example, the battery supporting frame structure further comprises a third cross-member attached to the first and second elongated frame members at a distance from the respective second end of the first and second elongated frame members to form a fifth compartment in which a fifth traction battery module is accommodated, wherein the second compartment is further delimited by the third cross-member and is arranged between the first and fifth compartments. A technical benefit may include that further traction battery modules can be provided, thereby further increasing the operation range for an electric traction motor propelling the vehicle.

Optionally in some examples, including in at least one preferred example, the fifth compartment is open ended at a second side of the battery supporting frame structure, the second side being arranged at a position corresponding to a position of the second end of at least one of the first, second and third elongated frame members. A technical benefit may include that the fifth traction battery module can be removed from the battery supporting frame structure in a simplified manner in a similar vein as described above for the first and third traction battery modules.

Optionally in some examples, including in at least one preferred example, the battery supporting frame structure further comprises a fourth cross-member attached to the second and third elongated frame members at a distance from the respective second end of the second and third elongated frame members to form a sixth compartment in which a sixth traction battery module is accommodated, wherein the fourth compartment is further delimited by the fourth cross-member and is arranged between the third and sixth compartments. A technical benefit may include that further traction battery modules can be provided, thereby further increasing the operation range for an electric traction motor propelling the vehicle.

Optionally in some examples, including in at least one preferred example, the sixth compartment is open ended at a second side of the battery supporting frame structure, the second side being arranged at a position corresponding to a position of the second end of at least one of the first, second and third elongated frame members. A technical benefit may include that the sixth traction battery module can be removed from the battery supporting frame structure in a simplified manner in a similar vein as described above for the first and third traction battery modules.

Optionally in some examples, including in at least one preferred example, the battery supporting frame structure further comprises a fourth elongated frame member arranged in parallel with the third elongated frame member and extending in the first direction from a first end to a second end. A technical benefit may include that the battery supporting frame structure enables for connection of yet further traction battery modules.

Optionally in some examples, including in at least one preferred example, the battery supporting frame structure further comprises a fifth cross-member attached to the third and fourth elongated frame members at a distance from the respective first end of the third and fourth elongated frame members to form a seventh and an eighth compartment on a respective opposite side of the fifth cross-member, wherein a seventh traction battery module is accommodated in the seventh compartment and an eighth traction battery module is accommodated in the eighth compartment, the seventh compartment being open ended at the first side of the battery supporting frame structure. A technical benefit may include that further traction battery modules can be provided, thereby further increasing the operation range for an electric traction motor propelling the vehicle.

Optionally in some examples, including in at least one preferred example, the battery supporting frame structure further comprises a sixth cross-member attached to the third and fourth elongated frame members at a distance from the respective second end of the third and fourth elongated frame members to form a ninth compartment in which a ninth traction battery module is accommodated, wherein the eighth compartment is further delimited by the sixth cross-member and is arranged between the seventh and ninth compartments. A technical benefit may include that further traction battery modules can be provided, thereby further increasing the operation range for an electric traction motor propelling the vehicle.

Optionally in some examples, including in at least one preferred example, the energy storage arrangement further comprises a second protective plate connected to first, second and third elongated frame members at the respective second end thereof. A technical benefit may include that the traction battery modules arranged at the second end can be protected from side crashes. Crash loads may be evenly distributed to reduce an intrusion level into a single traction battery module at the second end. The protective plate may also reduce the risk of penetration of objects into a traction battery module.

According to a second aspect, there is provided a vehicle, comprising a frame and an energy storage arrangement according to any one of the examples described above in relation to the first aspect, wherein each of the first, second and third elongated frame members is connected to the frame.

Optionally in some examples, including in at least one preferred example, the frame comprises a pair of longitudinally extending frame rails, the frame rails are arranged in parallel with, and spaced apart from, each other, wherein the second and fourth traction battery modules are positioned between the frame rails. A technical benefit may include that the second and fourth traction battery modules can be well protected by the frame rails.

Optionally in some examples, including in at least one preferred example, the second and fourth traction battery modules extend at least partly into a space formed between the frame rails. A technical benefit may include that the second and fourth traction battery modules can be well protected by the frame rails.

Further effects and features of the second aspect are largely analogous to those described above in relation to the first aspect.

According to a third aspect, there is provided a method of disconnecting traction battery modules from a battery supporting frame structure of the energy storage arrangement of any one of the examples described above in relation to the first aspect, the method comprising disconnecting the first traction battery module from the first and second elongated frame members, and removing the first traction battery module from the first compartment by horizontally moving the first traction battery module through the open ended first side of the first compartment.

The second aspect of the disclosure may seek to simplify the removal of traction battery modules from the frame of the vehicle. A technical benefit may include that the traction battery modules can be individually removed from the vehicle frame. Hence, a single traction battery module can hereby for example be simply replaced by another traction battery module without having to disconnect the traction battery modules arranged in the vicinity of the replaceable traction battery module. In addition, by arranging the first compartment with an open end at the first side, the first traction battery module can be removed from the battery supporting frame structure in a horizontal direction. This will simplify the removal of the first traction battery module from the battery supporting frame structure.

Optionally in some examples, including in at least one preferred example, the method further comprises disconnecting the second traction battery module from the first and second elongated frame members, and removing the second traction battery module from the second compartment by vertically moving the second traction battery module in a downward direction. A technical benefit may include that the second traction battery module can be arranged at a well-protected position whereby an operator needs to remove the second traction battery module in the vertical direction. The second traction battery module may be individually removable from the second compartment.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of an energy storage arrangement according to an example,
Fig. 3 is another exemplary illustration of an energy storage arrangement according to an example,
Fig. 4 is an exemplary exploded view of an energy storage arrangement and a frame of the vehicle according to an example, and
Fig. 5 is an exemplary flow chart of a method for disconnecting traction battery modules from a battery supporting frame of an energy storage arrangement according to an example.

### DETAILED DESCRIPTION

The detailed description set forth below provides information and examples of the disclosed technology with sufficient detail to enable those skilled in the art to practice the disclosure.

The following aims at describing an energy storage arrangement of which assembly and disconnection of traction battery modules from a vehicle frame is improved and simplified. A technical benefit may include that the traction battery modules can be individually assembled or disconnected to or from the vehicle frame. The following disclosure will also describe a solution which is less exposed to twisting forces caused during operation of the vehicle.

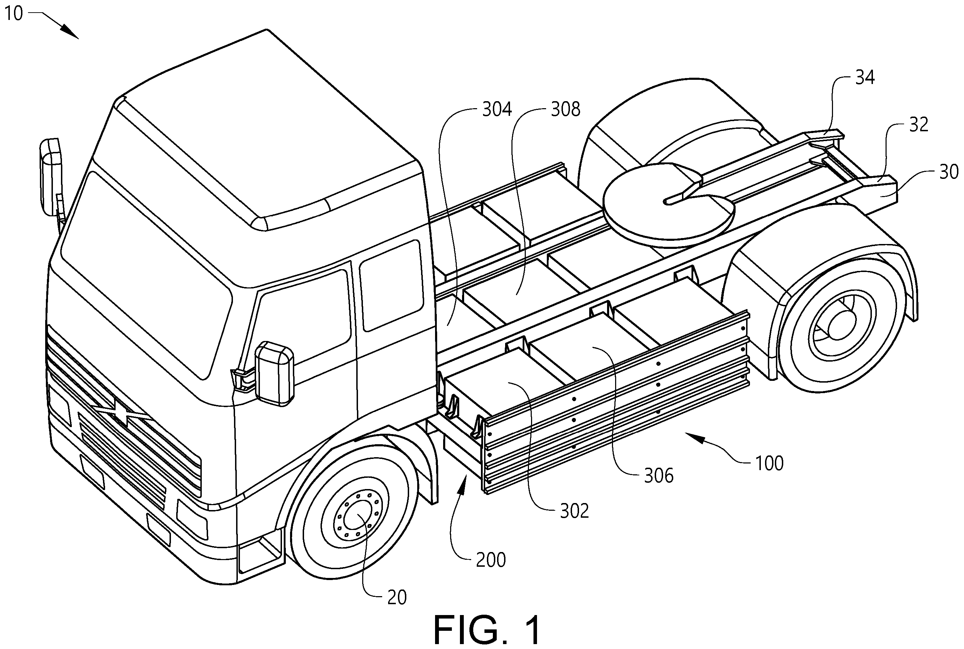

Reference is made to Fig. 1 which is an exemplary illustration of a vehicle 10 according to an example. The vehicle 10 is exemplified as a truck and is preferably propelled by one or more electric traction motors 20. In the example depicted in Fig. 1, the electric traction motor 20 is exemplified as a wheel hub motor although a single electric traction motor coupled to e.g. a propeller shaft is also conceivable. The vehicle 10 also comprises a frame 30. The frame 30 is exemplified as comprising a pair of longitudinally extending frame rails 32, 34. Hence, the frame extends in a longitudinal direction. The vehicle 10 further comprises an energy storage arrangement 100. The energy storage arrangement 100 is connected to the frame 30 of the vehicle 10. In particular, and as will be described in further detail below, the energy storage arrangement 100 comprises a plurality of traction battery modules 302, 304, 306, 308 which are each arranged in s respective compartment of a battery supporting frame structure 200. The battery supporting frame structure 200 is in turn connected to the frame 30 of the vehicle 10.

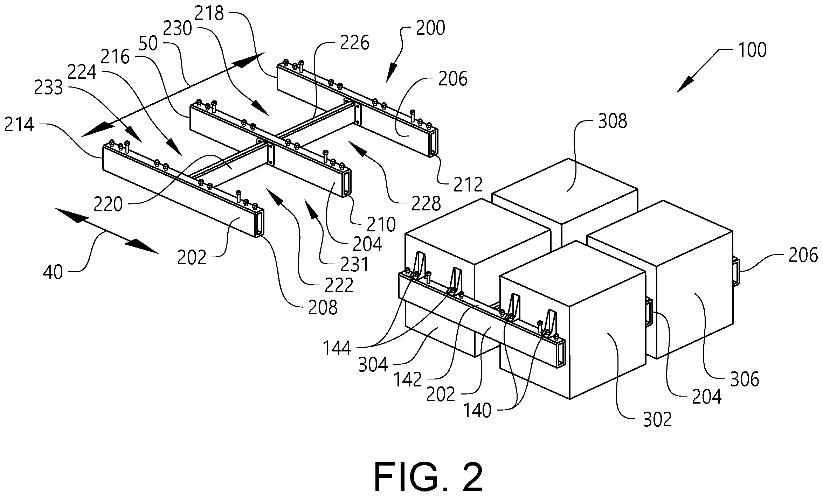

In order to describe the battery supporting frame structure 200 and the traction battery modules 302, 304, 306, 308 in further detail, reference is now made to Fig. 2, which is an exemplary illustration of an energy storage arrangement 100 according to an example. Fig. 2 illustrates the battery supporting frame structure 200 without the traction battery modules 302, 304, 306, 308, as well as the battery supporting frame structure 200 with the traction battery modules 302, 304, 306, 308 connected thereto.

As can be seen in Fig. 2, the battery frame supporting structure 200 comprises a first 202, second 204, and third 206 elongated frame member. The first 202, second 204, and third 206 elongated frame members may be formed as a respective rectangular tube as illustrated in Fig. 2. Other shapes are of course conceivable, such as an I-shaped beam profile, a solid cross-section, a T-shaped beam profile, etc. The material may e.g. be a high-strength material, such as e.g. steel. The first 202, second 204, and third 206 elongated frame members are each arranged in parallel with each other and extends in a first direction 40. The first direction 40 is preferably a lateral direction, i.e. perpendicular to the longitudinal direction 50. In yet further detail, the first elongated frame member 202 has a first end 208 and a second end 214, i.e. the first 208 and second 214 ends are outer end sides of the first elongated frame member 202Co 10.

The battery frame supporting structure 200 further comprises a first 220 and second 226 cross-member. Each of the first 220 and second 226 cross-members are elongated and preferably extends in a second direction, i.e. in the longitudinal direction 50. Hence, the first 220 and second 226 cross-members may each have an extension arranged parallel to the extension of the first 202, second 204, and third 206 elongated frame members. Although not depicted in Fig. 2, the cross-section of the first 220 and second 226 cross-members may be formed as a rectangular tube, an I-shaped beam, a solid cross-section, a T-shaped beam profile, etc., and the material may be a high-strength material, such as steel.

In yet further detail, the first cross-member 220 is attached to the first 202 and the second 204 elongated frame members. The first cross-member 220 may be attached to the first 202 and the second 204 elongated frame members by screws, bolts, rivets, etc. The first cross-member 220 is attached to the first 202 and the second 204 elongated frame members at a distance from a respective first end 208, 210 of the first 202 and second 204 elongated frame members. In detail, the first cross-member 220 may be attached to the first elongated frame member 202 at a first distance from the first end 208 thereof, and attached to second elongated frame member 204 at the same first distance from the first end 210 therefor. As illustrated in Fig. 2, the first cross-member 220 may be attached to the first 202 and second 204 elongated frame members at a respective center portion thereof, i.e. in the middle between the respective first 208, 210 and second 214, 216 ends.

The second cross-member 226 is attached to the second 204 and the third 206 elongated frame members. The second cross-member 226 may be attached to the second 204 and the third 206 elongated frame members by screws, bolts, rivets, etc. The second cross-member 226 is attached to the second 204 and the third 206 elongated frame members at a distance from a respective first end 210, 212 of the second 204 and third 206 elongated frame members. In detail, the second cross-member 226 may be attached to the second elongated frame member 204 at the above described first distance from the first end 210 thereof, and attached to third elongated frame member 206 at the same first distance from the first end 212 therefor. As illustrated in Fig. 2, the second cross-member 226 may be attached to the second 204 and third 206 elongated frame members at a respective center portion thereof, i.e. in the middle between the respective first 210, 212 and second 216, 218 ends.

The first 202, second 204 and third 206 elongated frame members, in combination with the first 220 and second 226 cross-members form a first 222, a second 224, a third 228, and a fourth 230 compartment. In particular, the first 202 and second 204 elongated frame members, in conjunction with the first cross-member 220 form the first 222 and second 224 compartments. In yet further detail, the first 222 and second 224 compartments are arranged on opposite sides of the first cross-member 220. In a similar vein, the second 204 and third 206 elongated frame members, in conjunction with the second cross-member 226 form the third 228 and fourth 230 compartments. In yet further detail, the third 228 and fourth 230 compartments are arranged on opposite sides of the second cross-member 226.

In the exemplification depicted in Fig. 2, each of the first 222, second 224, third 228 and fourth 230 compartments has one side that is open ended. In particular, the first 222 and third 228 compartments are open ended at a first side 231 of the battery supporting structure 200. The first side 231 of the battery supporting structure 200 is thus the side facing laterally and has a position which corresponds to the position of the first ends of at least one of the first 202, second 204 and third 206 elongated members. In the example in Fig. 2, the first side 231 may be defined as extending in the longitudinal direction 50 from the first end 208 of the first elongated frame member 202 to the first end 212 of the third elongated frame member 206. Hence, no elongated frame member or cross-member is arranged longitudinally at the first side 231. Put it differently, the battery supporting structure 200 is void from longitudinally extending elongated frame members and longitudinally extending cross-members at the first side 231.

In a similar vein, the second 224 and fourth 230 compartments are open ended at a second side 233 of the battery supporting structure 200. The second side 233 of the battery supporting structure 200 is thus the side facing laterally, in opposite direction compared to the above described first side 231, and has a position which corresponds to the position of the second ends of at least one of the first 202, second 204 and third 206 elongated members. In the example in Fig. 2, the second side 233 may be defined as extending in the longitudinal direction 50 from the second end 214 of the first elongated frame member 202 to the second end 218 of the third elongated frame member 206. Hence, no elongated frame member or cross-member is arranged longitudinally at the second side 233. Put it differently, the battery supporting structure 200 is void from longitudinally extending elongated frame members and longitudinally extending cross-members at the second side 233.

As further illustrated in Fig. 2, the energy storage arrangement 100 further comprises a plurality of traction battery modules 302, 304, 306, 308. As exemplified in Fig. 2, each of the plurality of traction battery modules 302, 304, 306, 308 may be cubical in shape. In further detail, a first traction battery module 302 is arranged in the above described first compartment 222. As depicted in Fig. 2, the first traction battery module 302 is suspended to the first 202 and second 204 elongated frame members. In detail, the first traction battery module 302 may be suspended to the first 202 and second 204 elongated frame members by a first set of brackets 140. In the exemplification in Fig. 2, the first set of brackets 140 is connected to an upper elongated side 142 of the first 202 and second 204 elongated frame members.

Moreover, a second traction battery module 304 is arranged in the above described second compartment 224. As depicted in Fig. 2, the second traction battery module 304 is suspended to the first 202 and second 204 elongated frame members. In detail, the second traction battery module 304 may be suspended to the first 202 and second 204 elongated frame members by a second set of brackets 144. In the exemplification in Fig. 2, the second set of brackets 144 is connected to the upper elongated side 142 of the first 202 and second 204 elongated frame members.

The third traction battery module 306 is arranged in the above described third compartment 228. As depicted in Fig. 2, the third traction battery module 306 is suspended to the second 204 and third 206 elongated frame members. In detail, the third traction battery module 306 may be suspended to the second 204 and third 206 elongated frame members by a set of brackets in a similar vein as for the above described first 302 and second 304 traction battery modules, i.e. to an upper elongated side of the respective second 204 and third 206 elongated frame members.

The fourth traction battery module 308 is arranged in the above described fourth compartment 230. As depicted in Fig. 2, the fourth traction battery module 308 is suspended to the second 204 and third 206 elongated frame members. In detail, the fourth traction battery module 308 may be suspended to the second 204 and third 206 elongated frame members by a set of brackets in a similar vein as for the above described first 302 and second 304 traction battery modules, i.e. to an upper elongated side of the respective second 204 and third 206 elongated frame members.

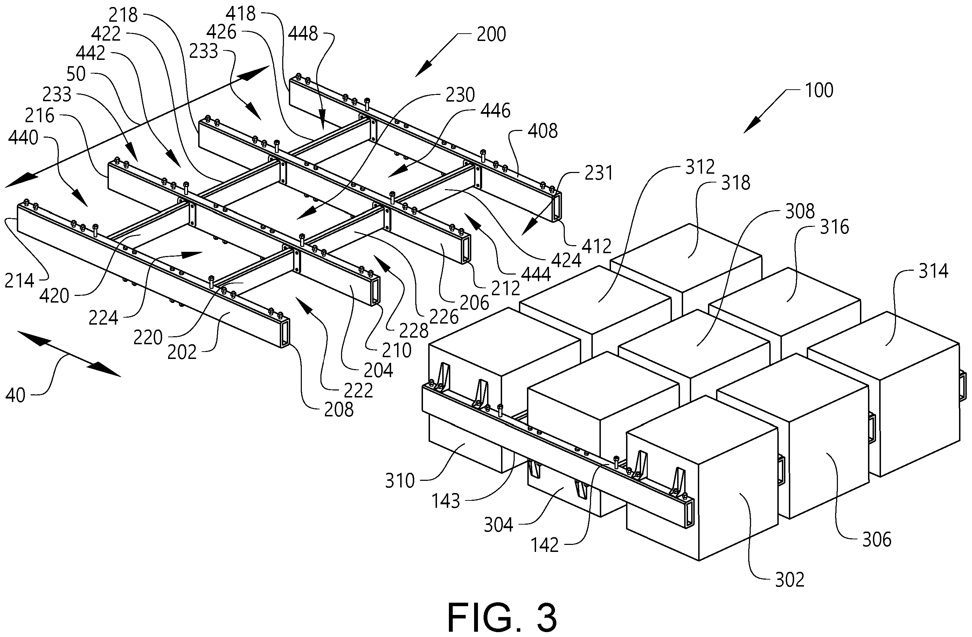

In order to describe a further example of the energy storage arrangement 100, reference is now made to Fig. 3. One of the differences between the energy storage arrangement in Fig. 2 and the energy storage arrangement 100 in Fig. 3 is that the battery supporting frame structure exemplified in Fig. 2 is arranged as a 2x2 matrix, while the battery supporting frame structure exemplified in Fig. 3 and described in the following is arranged as a 3x3 matrix.

In addition to the battery supporting frame structure 200 described above in relation to Fig. 2, the battery supporting frame structure 200 depicted in Fig. 3 also comprises a fourth elongated frame member 408. The fourth elongated frame member 408 is arranged in parallel with the third elongated frame member 206. In particular, the third elongated frame member 206 is arranged longitudinally between the second 204 and fourth 408 elongated frame members. In a similar vein as for the above described first 202, second 204 and third 206 elongated frame members, the fourth elongated frame member 408 also extends in the first direction 40 from a first end 412 to a second end 418 thereof. The fourth elongated frame member 408 may be designed in a similar shape as the above described first 202, second 204 and third 206 elongated frame members and made by the same material.

The battery frame supporting structure 200 in Fig. 3 also comprises a third 420, a fourth 422, a fifth 424, and a sixth 426 cross-member. In particular, the third cross-member 420 is attached to the first 202 and second 204 elongated frame members at a distance from the respective second end 214, 216 of the first 202 and second 204 elongated frame members. The third cross-member 420 may be arranged at a distance from the second end that corresponds to the distance from the first end for the first cross-member 220. In the exemplification depicted in Fig. 3, the second compartment 224 is thus formed by the first 202 and second 204 elongated members, and the first 220 and third 420 cross-members. The second compartment 224 is hereby, in a horizontal plane formed by the first 40 and second 50 directions, housed by the first 202 and second 204 elongated members, and the first 220 and third 420 cross-members. The second compartment is hereby not open ended as for the example described above in relation to Fig. 2. On the contrary, the third cross-member 420, together with the first 202 and second 204 elongated frame members forms a fifth compartment 440. The fifth compartment 440 is open ended at the second side 233 of the battery supporting structure 200 in a similar vein as described above in relation to Fig. 2 for the second 224 and fourth 230 compartments.

The fourth cross-member 422 is attached to the second 204 and third 206 elongated frame members at a distance from the respective second end 216, 218 of the second 204 and third 206 elongated frame members. The fourth cross-member 422 may be arranged at a distance from the second end that corresponds to the distance from the first end for the second cross-member 226. In the exemplification depicted in Fig. 3, the fourth compartment 230 is thus formed by the second 204 and third 206 elongated members, and the second 226 and fourth 422 cross-members. The fourth compartment 230 is hereby, in a horizontal plane formed by the first 40 and second 50 directions, housed by the second 204 and third 206 elongated members, and the second 226 and fourth 422 cross-members. The fourth compartment is hereby not open ended as for the example described above in relation to Fig. 2. On the contrary, the fourth cross-member 422, together with the second 204 and third 206 elongated frame members forms a sixth compartment 442. The sixth compartment 442 is open ended at the second side 233 of the battery supporting structure 200 in a similar vein as described above in relation to Fig. 2 for the second 224 and fourth 230 compartments.

The fifth cross-member 424 is attached to the third 206 and fourth 408 elongated frame members at a distance from the respective first end 212, 412 of the third 206 and fourth 408 elongated frame members. The fifth cross-member 424 may be arranged at a distance from the first end that corresponds to the distance from the first end for the second cross-member 226. In the exemplification depicted in Fig. 3, a seventh compartment 444 is formed by the third 206 and fourth 408 elongated frame members, and the fifth cross-member 424. The seventh compartment 444 is open ended at the first side 231 of the battery supporting structure 200 in a similar vein as described above in relation to Fig. 2 for the first 222 and third 228 compartments.

The sixth cross-member 426 is attached to the third 206 and fourth 408 elongated frame members at a distance from the respective second end 218, 418 of the third 206 and fourth 408 elongated frame members. The sixth cross-member 426 may be arranged at a distance from the second end that corresponds to the distance from the second end for the fourth cross-member 422. An eighth compartment 446 is hereby formed by the third 206 and fourth 408 elongated members, and the fifth 424 and sixth 426 cross-members. Also a ninth 448 compartment is formed by the third 206 and fourth 408 elongated members, and the sixth cross-members 426. The eighth compartment 446 is, in the horizontal plane formed by the first 40 and second 50 directions, housed between the third 206 and fourth 408 elongated members, and the fifth 424 and sixth 426 cross-members, i.e. the eighth compartment is not open ended. The ninth compartment 448 open ended at the second side 233 of the battery supporting structure 200 in a similar vein as described above in relation to Fig. 2 for the second 224 and fourth 230 compartments.

Moreover, the exemplified energy storage arrangement 100 in Fig. 3 also comprises a fifth 310, a sixth 312, a seventh 314, an eighth 316 and a ninth 318 traction battery module. In detail, the fifth traction battery module 310 is arranged in the fifth compartment 440, the sixth traction battery module 312 is arranged in the sixth compartment 442, the seventh traction battery module 314 is arranged in the seventh compartment 444, the eighth traction battery module 316 is arranged in the eighth compartment 446, and the ninth traction battery module 318 is arranged in the ninth compartment 448.

The traction battery modules are each suspended to the elongated frame members forming the compartment in which the respective traction battery module is accommodated. The first 302, third 306, fifth 310, sixth 312, seventh 314 and ninth 318 traction battery module is connected to their respective elongated frame members via a set of brackets that are connected to the above described upper elongated side 142. The second 304, fourth 308 and eighth 316 traction battery modules are however connected to their respective elongated frame members by a set of brackets connected to a lower elongated side 143 thereof. The upper 142 and lower 143 elongated sides are thus facing in opposite directions, where the lower elongated side 143 face the ground surface and the upper elongated side 142 faces away from the ground surface. To disconnect the first 302, third 306, fifth 310, sixth 312, seventh 314 and ninth 318 traction battery modules, an operator can reach the screws/bolts connecting the brackets from above, which the second 304, fourth 308 and eighth 316 traction battery modules are disconnected from below.

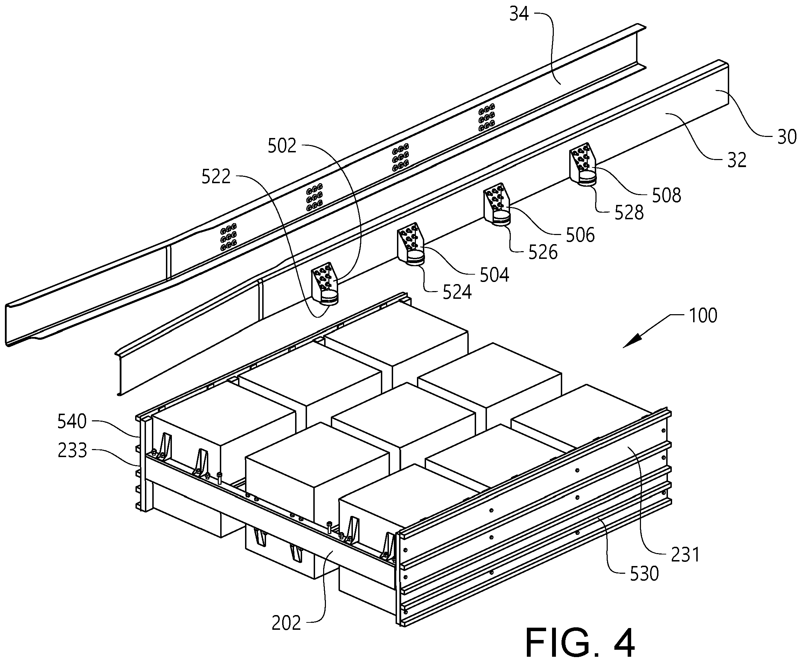

Reference is now made to Fig. 4 which is an exemplary exploded view of the energy storage arrangement 100 and the frame 30 of the vehicle 10 according to an example. As can be seen in Fig. 4, the energy storage arrangement 100 comprises a set of frame brackets 502, 504, 506, 508. The set of frame brackets comprises a first frame bracket 502, a second frame bracket 504, a third frame bracket 506 and a fourth frame bracket 508. The frame brackets are illustrated as connected to the first frame rail 32 and it should be understood that the energy storage arrangement 100 comprises similar frame brackets also connected to the second frame rail 34.

The first frame bracket 502 is connected to the first elongated frame member 202, the second frame bracket 504 is connected to the second elongated frame member 204, the third frame bracket 506 is connected to the third elongated frame member 206, and the fourth frame bracket 508 is connected to the fourth elongated frame member 408. Moreover, a set of elastic bushings 522, 524, 526, 528 may also be provided to the energy storage arrangement 100. In particular, a first elastic bushing 522 may be connected to the first frame bracket 502, i.e. the first elastic bushing 522 is arranged between the first frame bracket 502 and the first elongated frame member 202. A second elastic bushing 524 may be connected to the second frame bracket 504, i.e. the second elastic bushing 524 is arranged between the second frame bracket 504 and the second elongated frame member 204. The third elastic bushing 526 may be connected to the third frame bracket 506, i.e. the third elastic bushing 526 is arranged between the third frame bracket 506 and the third elongated frame member 206. The fourth elastic bushing 528 may be connected to the fourth frame bracket 508, i.e. the fourth elastic bushing 528 is arranged between the fourth frame bracket 508 and the fourth elongated frame member 208. The elastic bushings may be formed by an elastomeric material.

Furthermore, and as is evident from Fig. 4 and also depicted in Fig. 1, the second 304 and fourth 308 traction battery modules, as well as the eighth traction battery module 316 are, when the battery supporting frame structure 200 is attached to the frame 30 of the vehicle 10, are arranged at least partly between the pair of frame rails 32, 34. In detail, the second 304, fourth 308 and eighth 316 traction battery modules extend at least partly into the space formed between the frame rails 32, 34.

Further, the energy storage arrangement 100 also comprises a first 530 and second 540 protective plate. The first protective plate 530 is arranged at the above described first side 231 and is connected to at least one, preferably all, of the first 202, second 204, third 206 and fourth 408 elongated frame members. The second protective plate 540 is arranged at the above described second side 233 and is connected to at least one, preferably all, of the first 202, second 204, third 206 and fourth 408 elongated frame members.

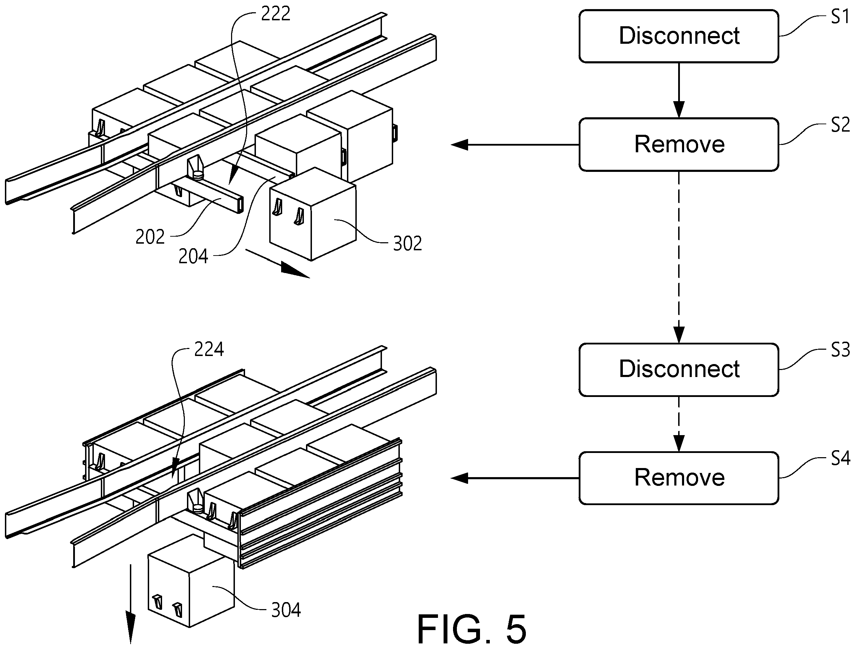

Turning now to Fig. 5 which is an exemplary flow chart of a method for disconnecting traction battery modules from a battery supporting frame of an energy storage arrangement according to an example. When the traction battery modules are connected to the battery supporting frame structure 200, the first traction battery module 302 can be disconnected S1 from the first 202 and second 204 elongated frame members. As indicated above, an operator may disconnect the first traction battery module 302 from above by e.g. removing the screws/bolts that connects the brackets to the respective first 202 and second 204 elongated frame members. Thereafter, the first traction battery 302 is removed S2 from the first compartment 222 by horizontally moving the first traction battery module through the open ended first side of the first compartment. The third 306, fifth 310, sixth 312, seventh 314 and ninth 318 traction battery modules can be disconnected and removed from the battery supporting frame in a similar manner.

The second traction battery module 304 can also be disconnected S4 from the first 202 and second 204 elongated frame members. As indicated above, an operator may disconnect the second traction battery module 304 from below by e.g. removing the screws/bolts that connects the brackets to the respective first 202 and second 204 elongated frame members. Subsequently, the second traction battery module 304 is removed S4 from the second compartment 224 by vertically moving the second traction battery module 304 in a downward direction. The fourth 308 and eighth 316 traction battery modules can be disconnected and removed from the battery supporting frame in a similar manner.

### EXAMPLE LIST

Example 1. An energy storage arrangement for a vehicle, the energy storage arrangement comprising: a battery supporting frame structure, comprising: a first elongated frame member, a second elongated frame member, and a third elongated frame member, each of the first, second and third elongated frame members arranged in parallel and extending in a first direction from a respective first end to a respective second end, wherein each of the first, second and third elongated frame members are arranged to be connected to a frame of the vehicle, a first cross-member attached to the first and second elongated frame members at a distance from the respective first end of the first and second elongated frame members to form a first and a second compartment on a respective opposite side of the first cross-member, and a second cross-member attached to the second and third elongated frame members at a distance from the respective first end of the second and third elongated frame members to form a third and a fourth compartment on a respective opposite side of the second cross-member, wherein each of the first and third compartments is open ended at a first side of the battery supporting frame structure, the first side being arranged at a position corresponding to a position of the first end of at least one of the first, second and third elongated frame members, and a plurality of traction battery modules, wherein a first traction battery module is arranged in the first compartment, a second traction battery module is arranged in the second compartment, a third traction battery module is arranged in the third compartment, and a fourth traction battery module is arranged in the fourth compartment.

Example 2. The energy storage arrangement of example 1, wherein each of the first and third traction battery modules is removable from the battery supporting frame structure in the first direction through the open ended first side of the battery supporting frame structure.

Example 3. The energy storage arrangement of any one of examples 1 or 2, wherein the first and second traction battery modules are each suspended to the first and second elongated frame members.

Example 4. The energy storage arrangement of example 3, wherein the energy storage arrangement further comprising a first set of brackets connecting the first traction battery module to the first and second elongated frame members, and a set of second set of brackets connecting the second traction battery module to the first and second elongated frame members.

Example 5. The energy storage arrangement of example 4, wherein the first set of brackets is connected to an upper elongated side of the first and second elongated frame members, and the second set of brackets is connected to a lower elongated side of the first and second elongated frame members, the upper and lower elongated sides facing in opposite directions.

Example 6. The energy storage arrangement of any one of the preceding examples, further comprising a set of frame brackets, each frame bracket being connected to one of the first, second and third elongated frame members and configured to be attached to the frame of the vehicle.

Example 7. The energy storage arrangement of example 6 when dependent on any one of examples 4 or 5, further comprises a set of elastic bushings, the elastic bushings being attached to the first and second sets of brackets and/or to the frame bracket.

Example 8. The energy storage arrangement of any one of the preceding examples, further comprising a protective plate connected to first, second and third elongated frame members at the respective first end thereof.

Example 9. The energy storage arrangement of any one of the preceding examples, the battery supporting frame structure further comprising a third cross-member attached to the first and second elongated frame members at a distance from the respective second end of the first and second elongated frame members to form a fifth compartment in which a fifth traction battery module is accommodated, wherein the second compartment is further delimited by the third cross-member and is arranged between the first and fifth compartments.

Example 10. The energy storage arrangement of example 9, wherein the fifth compartment is open ended at a second side of the battery supporting frame structure, the second side being arranged at a position corresponding to a position of the second end of at least one of the first, second and third elongated frame members.

Example 11. The energy storage arrangement of any one of the preceding examples, the battery supporting frame structure further comprising a fourth cross-member attached to the second and third elongated frame members at a distance from the respective second end of the second and third elongated frame members to form a sixth compartment in which a sixth traction battery module is accommodated, wherein the fourth compartment is further delimited by the fourth cross-member and is arranged between the third and sixth compartments.

Example 12. The energy storage arrangement of example 11, wherein the sixth compartment is open ended at a second side of the battery supporting frame structure, the second side being arranged at a position corresponding to a position of the second end of at least one of the first, second and third elongated frame members.

Example 13. The energy storage arrangement of any one of the preceding examples, the battery supporting frame structure further comprising a fourth elongated frame member arranged in parallel with the third elongated frame member and extending in the first direction from a first end to a second end.

Example 14. The energy storage arrangement of example 13, the battery supporting frame structure further comprising a fifth cross-member attached to the third and fourth elongated frame members at a distance from the respective first end of the third and fourth elongated frame members to form a seventh and an eighth compartment on a respective opposite side of the fifth cross-member, wherein a seventh traction battery module is accommodated in the seventh compartment and an eighth traction battery module is accommodated in the eighth compartment, the seventh compartment being open ended at the first side of the battery supporting frame structure.

Example 15. The energy storage arrangement of example 14, the battery supporting frame structure further comprising a sixth cross-member attached to the third and fourth elongated frame members at a distance from the respective second end of the third and fourth elongated frame members to form a ninth compartment in which a ninth traction battery module is accommodated, wherein the eighth compartment is further delimited by the sixth cross-member and is arranged between the seventh and ninth compartments.

Example 16. The energy storage arrangement of any one of the preceding examples, further comprising a second protective plate connected to first, second and third elongated frame members at the respective second end thereof.

Example 17. A vehicle, comprising a frame and an energy storage arrangement according to any one of the preceding examples, wherein each of the first, second and third elongated frame members is connected to the frame.

Example 18. The vehicle of example 17, wherein the frame comprises a pair of longitudinally extending frame rails, the frame rails are arranged in parallel with, and spaced apart from, each other, wherein the second and fourth traction battery modules are positioned between the frame rails.

Example 19. The vehicle of example 18, wherein the second and fourth traction battery modules extend at least partly into a space formed between the frame rails.

Example 20. A method of disconnecting traction battery modules from a battery supporting frame structure of the energy storage arrangement of any one of examples 1 - 16, the method comprising: disconnecting the first traction battery module from the first and second elongated frame members, and removing the first traction battery module from the first compartment by horizontally moving the first traction battery module through the open ended first side of the first compartment.

Example 21. The method of example 20, further comprising: disconnecting the second traction battery module from the first and second elongated frame members, and removing the second traction battery module from the second compartment by vertically moving the second traction battery module in a downward direction.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage arrangement (100) for a vehicle, the energy storage arrangement comprising:
- a battery supporting frame structure (200), comprising:
- a first elongated frame member (202), a second elongated frame member (204), and a third elongated frame member (206), each of the first, second and third elongated frame members arranged in parallel and extending in a first direction (40) from a respective first end (208, 210, 212) to a respective second end (214, 216, 218), wherein each of the first, second and third elongated frame members are arranged to be connected to a frame of the vehicle,
- a first cross-member (220) attached to the first (202) and second (204) elongated frame members at a distance from the respective first end (208, 210) of the first (202) and second (204) elongated frame members to form a first (222) and a second (224) compartment on a respective opposite side of the first cross-member (220), and a second cross-member (226) attached to the second (204) and third (206) elongated frame members at a distance from the respective first end (210, 212) of the second (204) and third (206) elongated frame members to form a third (228) and a fourth (230) compartment on a respective opposite side of the second cross-member, wherein each of the first (222) and third (228) compartments is open ended at a first side (231) of the battery supporting frame structure, the first side being arranged at a position corresponding to a position of the first end of at least one of the first, second and third elongated frame members, and
- a plurality of traction battery modules (302, 304, 306, 308), wherein a first traction battery module (302) is arranged in the first compartment (222), a second traction battery module (304) is arranged in the second compartment (224), a third traction battery module (306) is arranged in the third compartment (228), and a fourth traction battery module (308) is arranged in the fourth compartment (230).

2. The energy storage arrangement of claim 1, wherein each of the first and third traction battery modules is removable from the battery supporting frame structure in the first direction through the open ended first side of the battery supporting frame structure.

3. The energy storage arrangement of any one of claims 1 or 2, wherein the first and second traction battery modules are each suspended to the first and second elongated frame members.

4. The energy storage arrangement of claim 3, wherein the energy storage arrangement further comprising a first set of brackets connecting the first traction battery module to the first and second elongated frame members, and a set of second set of brackets connecting the second traction battery module to the first and second elongated frame members.

5. The energy storage arrangement of claim 4, wherein the first set of brackets is connected to an upper elongated side of the first and second elongated frame members, and the second set of brackets is connected to a lower elongated side of the first and second elongated frame members, the upper and lower elongated sides facing in opposite directions.

6. The energy storage arrangement of any one of the preceding claims, further comprising a set of frame brackets, each frame bracket being connected to one of the first, second and third elongated frame members and configured to be attached to the frame of the vehicle.

7. The energy storage arrangement of claim 6 when dependent on any one of claims 4 or 5, further comprises a set of elastic bushings, the elastic bushings being attached to the first and second sets of brackets and/or to the frame bracket.

8. The energy storage arrangement of any one of the preceding claims, the battery supporting frame structure further comprising a third cross-member attached to the first and second elongated frame members at a distance from the respective second end of the first and second elongated frame members to form a fifth compartment in which a fifth traction battery module is accommodated, wherein the second compartment is further delimited by the third cross-member and is arranged between the first and fifth compartments.

9. The energy storage arrangement of claim 8, wherein the fifth compartment is open ended at a second side of the battery supporting frame structure, the second side being arranged at a position corresponding to a position of the second end of at least one of the first, second and third elongated frame members.

10. The energy storage arrangement of any one of the preceding claims, the battery supporting frame structure further comprising a fourth cross-member attached to the second and third elongated frame members at a distance from the respective second end of the second and third elongated frame members to form a sixth compartment in which a sixth traction battery module is accommodated, wherein the fourth compartment is further delimited by the fourth cross-member and is arranged between the third and sixth compartments.

11. The energy storage arrangement of any one of the preceding claims, the battery supporting frame structure further comprising a fourth elongated frame member arranged in parallel with the third elongated frame member and extending in the first direction from a first end to a second end.

12. The energy storage arrangement of claim 11, the battery supporting frame structure further comprising a fifth cross-member attached to the third and fourth elongated frame members at a distance from the respective first end of the third and fourth elongated frame members to form a seventh and an eighth compartment on a respective opposite side of the fifth cross-member, wherein a seventh traction battery module is accommodated in the seventh compartment and an eighth traction battery module is accommodated in the eighth compartment, the seventh compartment being open ended at the first side of the battery supporting frame structure.

13. A vehicle, comprising a frame and an energy storage arrangement according to any one of the preceding claims, wherein each of the first, second and third elongated frame members is connected to the frame.

14. The vehicle of claim 13, wherein the frame comprises a pair of longitudinally extending frame rails, the frame rails are arranged in parallel with, and spaced apart from, each other, wherein the second and fourth traction battery modules are positioned between the frame rails.

15. A method of disconnecting traction battery modules from a battery supporting frame structure of the energy storage arrangement of any one of claims 1 - 16, the method comprising:
- disconnecting the first traction battery module from the first and second elongated frame members, and
- removing the first traction battery module from the first compartment by horizontally moving the first traction battery module through the open ended first side of the first compartment.
